# EUROPEAN PATENT APPLICATION

(11) **EP 4 768 796 A1**
(43) Date of publication of application: **01.07.2026**
(21) Application number: 24871543.5
(22) Date of filing: 09.08.2024
(51) Int. Cl.: F24F 1/12, F16F 15/02

(54) **VIBRATION ISOLATING MEMBER, OUTDOOR UNIT, AND METHOD FOR ATTACHING VIBRATION ISOLATING MEMBER**

(30) Priority: 28.09.2023 JP 2023168415
(71) Applicant: Mitsubishi Heavy Industries Thermal Systems, Ltd., Tokyo 100-8332 (JP)
(72) Inventor: YOSHIGA, Masanori, Tokyo 100-8332 (JP); SAKAI, Hiroyuki, Tokyo 100-8332 (JP)
(74) Representative: Cabinet Beau de Loménie
(86) International application number: PCT/JP2024/028722
(87) International publication number: WO 2025/069741

(57) **Abstract**

The objective of the present invention is to improve the workability of work for installing a vibration isolating member. A vibration isolating member (20) is attached to an outdoor unit (2) that includes a compressing device (10) for compressing a refrigerant, and a separating wall (3g) disposed adjacent to the compressing device (10). The vibration isolating member (20) comprises: a vibration suppressing unit (30) which suppresses vibration of the compressing device (10), and which has a right side surface facing portion that extends in the front-rear direction, is provided in a gap formed between the compressing device (10) and the separating wall (3g), and faces a side surface of the compressing device (10), and a right front surface facing portion that extends in the left-right direction intersecting the front-rear direction and faces the front surface of the compressing device (10); and a support unit (40) which supports the vibration suppressing unit (30) from below.

## Description

### Technical Field

The present disclosure relates to a vibration isolating member, an outdoor unit, and a method for attaching a vibration isolating member.

### Background Art

In the related art, it is known to provide a vibration isolating member that suppresses vibration of a compressor during transport in order to prevent damage to a compressor, a refrigerant pipe connected to the compressor, or the like due to vibration, impact, or the like generated during transport (for example, PTL 1).

PTL 1 discloses a vibration isolating cushion that is attachably and detachably attached to prevent excessive shaking of a compressor during transport of an outdoor unit to an installation location. A plurality of vibration insulating cushions are provided, and each vibration isolating cushion is placed on a terminal block provided on an upper portion of an outer surface of the compressor or is placed on an upper surface of the compressor.

### Citation List

### Patent Literature

[PTL 1] Japanese Patent No. 6762421

### Summary of Invention

### Technical Problem

However, in the outdoor unit disclosed in PTL 1, a plurality of the vibration isolating cushions are installed to be in contact with a front surface and a rear surface of the compressor. Therefore, the vibration isolating cushion installed to be in contact with the rear surface of the compressor may complicate the installation work because the compressor interferes with the installation.

The present disclosure has been made in view of such circumstances, and an object thereof is to provide a vibration isolating member, an outdoor unit, and a method for attaching a vibration isolating member, which can improve workability of installation work.

### Solution to Problem

A vibration isolating member according to an aspect of the present disclosure is a vibration isolating member to be attached to an outdoor unit including a compressing device that compresses a refrigerant and an adjacent member that is disposed adjacent to the compressing device, the vibration isolating member including a vibration suppression portion that includes a first facing portion that extends in a predetermined direction, is provided in a gap formed between the compressing device and the adjacent member, and faces a first surface of the compressing device and a second facing portion that extends in an intersecting direction intersecting the predetermined direction and faces a second surface of the compressing device, and that suppresses vibration of the compressing device, and a support portion that supports the vibration suppression portion from below.

A method for attaching a vibration isolating member according to an aspect of the present disclosure is a method for attaching a vibration isolating member to an outdoor unit including a compressing device that compresses a refrigerant and an adjacent member that is disposed adjacent to the compressing device, in which the vibration isolating member includes a vibration suppression portion that includes a first surface facing portion that extends in a predetermined direction, is provided in a gap formed between the compressing device and the adjacent member, and faces a first surface of the compressing device and a second surface facing portion that extends in an intersecting direction intersecting the predetermined direction and faces a second surface of the compressing device, and that suppresses vibration of the compressing device, and a support portion that supports the vibration suppression portion from below, the method including an insertion step of inserting the first surface facing portion into the gap from the predetermined direction, and a placement step of placing the vibration suppression portion on the support portion.

### Advantageous Effects of Invention

According to the present disclosure, workability of installation work of the vibration isolating member can be improved.

### Brief Description of Drawings

FIG. 1 is a front view showing an outdoor unit according to an embodiment of the present disclosure.
FIG. 2 is a perspective view showing the outdoor unit according to the embodiment of the present disclosure, and showing a state in which a front panel is removed.
FIG. 3 is a perspective view showing a state in which the vibration isolating member is attached to the compressing device according to the embodiment of the present disclosure.
FIG. 4 is a perspective view showing a vibration suppression portion of the vibration isolating member according to the embodiment of the present disclosure.
FIG. 5 is a perspective view showing a support portion of the vibration isolating member according to the embodiment of the present disclosure.

### Description of Embodiments

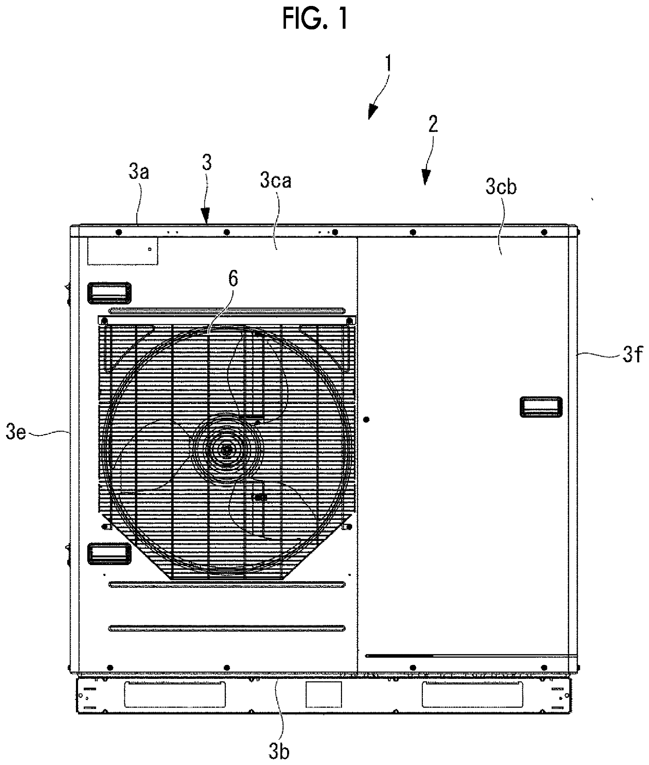

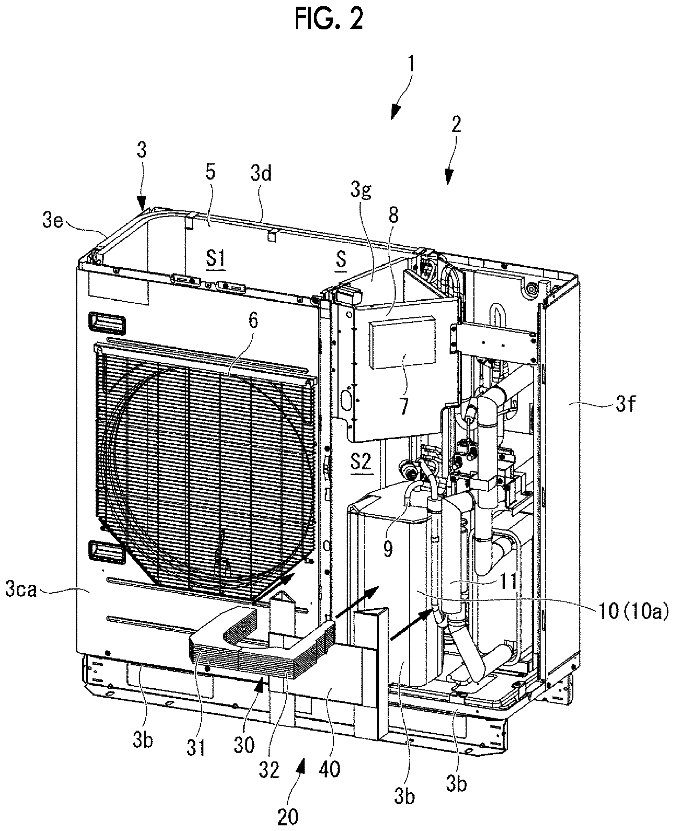

Hereinafter, an embodiment of the vibration isolating member, the outdoor unit, and the method for attaching the vibration isolating member according to the present disclosure will be described with reference to FIGS. 1 to 5. In FIG. 2, an upper panel 3a and a machine chamber front panel 3cb are omitted.

As shown in FIGS. 1 and 2, an air conditioner 1 according to the present embodiment includes a compressor (not shown) that compresses a refrigerant, a four-way switching valve (not shown) that switches a circulation direction of the refrigerant, an outdoor heat exchanger 5 that performs heat exchange between the refrigerant and outside air, an expansion valve (not shown) that expands the refrigerant, and an indoor heat exchanger (not shown) that performs heat exchange between the refrigerant and indoor air from an indoor fan (not shown), and includes a closed-cycle refrigerant cycle in which these devices are connected by a refrigerant pipe 9. Various devices are accommodated in an indoor unit (not shown) or the outdoor unit 2.

As shown in FIGS. 1 and 2, the outdoor unit 2 includes a housing 3, a compressing device 10, the outdoor heat exchanger 5, a blower 6 that guides outside air to the outdoor heat exchanger 5, a control box 7, a bracket 8 that supports the control box 7 with respect to the housing 3, the refrigerant pipe 9, a water pipe 11, and a vibration isolating member 20.

The housing 3 is a member having a substantially rectangular parallelepiped shape that configures an outer shell of the outdoor unit 2 and has a space S formed therein. The control box 7 is a member that accommodates an electrical component, such as an inverter, that controls the compressor and the like. Each of the portions constituting the outdoor unit 2 is disposed in the space S. The space S is partitioned into a heat exchanger chamber S1 in which the outdoor heat exchanger 5 is provided and a machine chamber S2 in which the compressing device 10 and the like are provided by a partition wall 3g described below.

The housing 3 includes an upper panel 3a that defines an upper surface of the space S, a bottom panel 3b that defines a lower surface of the space S, a rear panel 3d that defines a rear surface of the space S, a right panel 3e that defines a right surface of the space S, and a left panel 3f that defines a left surface of the space S. In addition, the housing 3 includes a heat exchanger chamber front panel 3ca that defines a front surface of the heat exchanger chamber S1 and a machine chamber front panel 3cb that defines a front surface of the machine chamber S2. The housing 3 has a partition wall 3g that separates a heat exchanger chamber S1 in which the outdoor heat exchanger 5 and the like are disposed from a machine chamber S2 in which the compressor, the control box 7, and the like are disposed.

The compressing device 10 includes an insulation 10a that constitutes an outer periphery and a compressor (not shown) that is accommodated inside the insulation 10a. The insulation 10a blocks noise generated by the compressor.

The compressing device 10 is a device that is accommodated in the machine chamber S2 of the space S and is disposed at a position facing the machine chamber front panel 3cb. The compressor compresses the refrigerant circulating in the refrigerant cycle and discharges the refrigerant to the refrigerant pipe 9.

The machine chamber front panel 3cb is configured to be attachable and detachable. A discharge opening (not shown) that discharges the outside air introduced into the outdoor unit 2 by the blower 6 is formed in the heat exchanger chamber front panel 3ca. An introduction opening (not shown) for introducing the outside air into the outdoor unit 2 is formed in the rear panel 3d. The partition wall 3g is provided to divide the space S into left and right portions.

In the heat exchanger chamber S1, the outdoor heat exchanger 5 having a substantially L-shape in a plan view is placed on the bottom panel 3b so as to follow the right panel 3e and the rear panel 3d. In the heat exchanger chamber S1, the blower 6 that guides the outside air to the outdoor heat exchanger 5 and an electric motor (not shown) that drives the blower 6 are disposed.

The machine chamber S2 is a space partitioned by the machine chamber front panel 3cb, the left panel 3f, and the partition wall 3g. In the machine chamber S2, the compressing device 10 is placed on the bottom panel 3b. The bracket 8 supported by the partition wall 3g is provided on the upper portion of the machine chamber S2. The control box 7 is suspended from the bracket 8 to be supported.

The refrigerant pipe 9 is a pipe for circulating the refrigerant through the refrigerant cycle. The refrigerant pipe 9 is a general term for the pipes provided in the machine chamber S2 in the outdoor unit 2. The refrigerant pipe 9 includes, for example, a suction pipe through which the refrigerant supplied to the compressor flows and a discharge pipe through which the refrigerant discharged from the compressor flows.

The water pipe 11 is a pipe having a larger inner diameter and outer diameter than the refrigerant pipe 9, and water flows inside the water pipe 11.

In the present embodiment, the vibration isolating member 20 is attached to prevent the compressing device 10 disposed in the machine chamber S2 from being displaced due to intense vibration or impact during transport, thereby preventing damage caused by stress generated in the compressing device 10 or the refrigerant pipe 9 connected to the compressing device 10. That is, the outdoor unit 2 during transport includes the vibration isolating member 20.

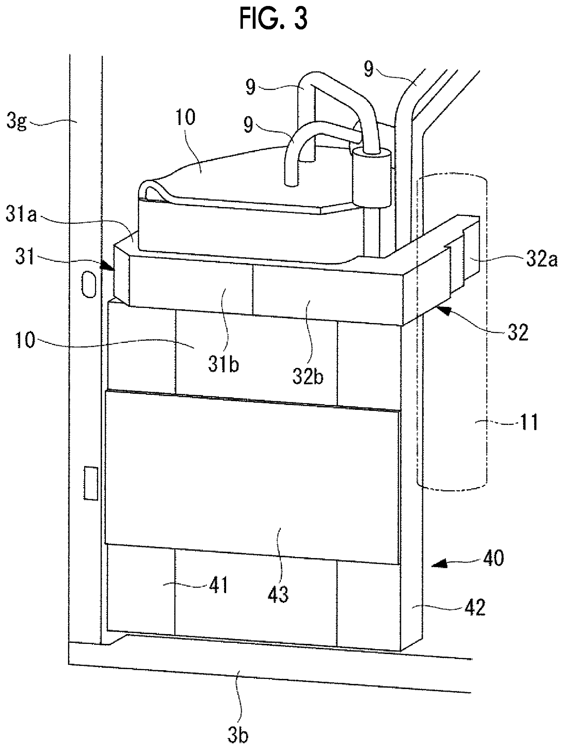

Next, the vibration isolating member 20 will be described in detail with reference to FIGS. 3 to 5.

As shown in FIG. 3, the vibration isolating member 20 includes a vibration suppression portion 30 that faces a front surface and a side surface of the compressing device 10 and a support portion 40 that supports the vibration suppression portion 30 from below. The vibration suppression portion 30 and the support portion 40 are separate from each other.

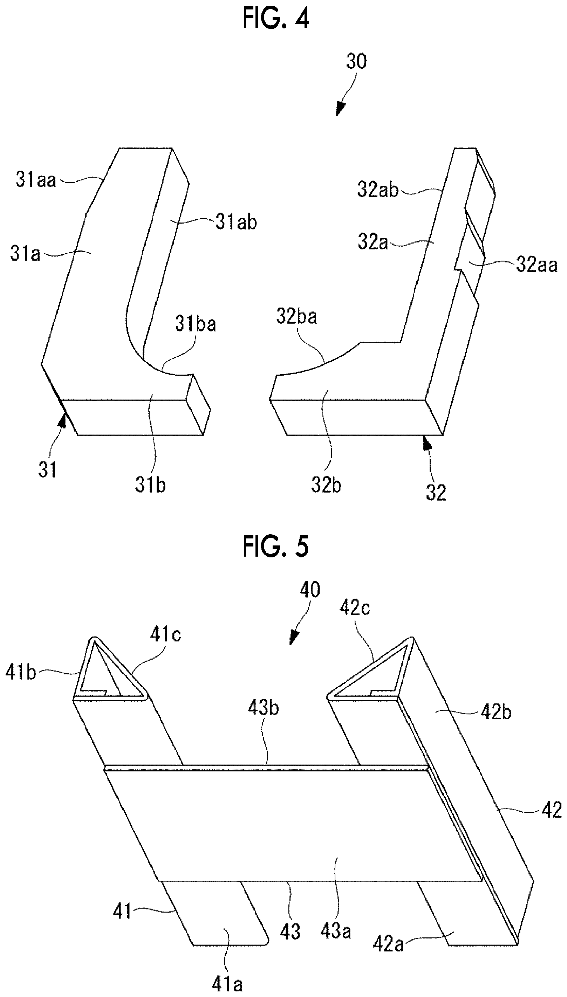

As shown in FIGS. 3 and 4, the vibration suppression portion 30 includes a first vibration suppression portion 31 that faces the front surface and the right side surface of the compressing device 10 and a second vibration suppression portion 32 that faces the front surface and the left side surface of the compressing device 10. In addition, the vibration suppression portion 30 does not include a portion facing the rear surface of the compressing device 10. The first vibration suppression portion 31 and the second vibration suppression portion 32 are separate from each other. The first vibration suppression portion 31 and the second vibration suppression portion 32 are provided to face each other across the compressing device 10.

The vibration suppression portion 30 suppresses the vibration of the compressing device 10. In particular, the vibration suppression portion 30 suppresses vibration of the compressing device 10 in the left-right direction.

The first vibration suppression portion 31 integrally includes a right side surface facing portion (first surface facing portion) 31a that extends in the front-rear direction (predetermined direction) and faces the right side surface (first surface) of the compressing device 10 and a right front surface facing portion (second surface facing portion) 31b that is bent from a front end of the right side surface facing portion 31a and extends in the left-right direction (intersecting direction) and faces a right half of the front surface (second surface) of the compressing device 10. The first vibration suppression portion 31 is a plate-shaped member and has a substantially L-like shape in plan view. The first vibration suppression portion 31 is formed of corrugated cardboard. Specifically, the first vibration suppression portion 31 is formed of a plurality of laminated plate-shaped corrugated cardboard members (see FIG. 2).

As shown in FIG. 3, the right side surface facing portion 31a is provided between the right side surface of the compressing device 10 and the partition wall (adjacent member) 3g. In other words, the right side surface facing portion 31a is provided in a gap formed between the right side surface of the compressing device 10 and the partition wall 3g. The right side surface facing portion 31a extends in a substantially linear shape.

A side surface 31aa of the right side surface facing portion 31a on the partition wall 3g side faces the partition wall 3g and is in contact with the partition wall 3g. In addition, a side surface 31ab of the right side surface facing portion 31a on the compressing device 10 side faces the right side surface of the compressing device 10 and is in contact with the right side surface of the compressing device 10. The side surface 31ab of the right side surface facing portion 31a on the compressing device 10 side is planar.

The right front surface facing portion 31b is provided between the front surface of the compressing device 10 and the machine chamber front panel 3cb (see FIG. 1).

A surface 31ba of the right front surface facing portion 31b on the compressing device 10 side faces the front surface of the compressing device 10 and is in contact with the front surface of the compressing device 10. In addition, the surface 31ba on the compressing device 10 side is curved to correspond to the front surface of the compressing device 10.

A connection portion between the side surface 31ab of the right side surface facing portion 31a and the surface 31ba of the right front surface facing portion 31b is curved to follow an outer peripheral surface of the compressing device 10.

The second vibration suppression portion 32 integrally includes a left side surface facing portion (first surface facing portion) 32a that extends in the front-rear direction (predetermined direction) and faces the left side surface (first surface) of the compressing device 10 and a left front surface facing portion (second surface facing portion) 32b that is bent from a front end of the left side surface facing portion 32a and extends in the left-right direction (intersecting direction) and faces a left half of the front surface (second surface) of the compressing device 10. The second vibration suppression portion 32 is a plate-shaped member and has a substantially L-like shape in plan view. The second vibration suppression portion 32 is formed of corrugated cardboard. Specifically, the second vibration suppression portion 32 is formed of a plurality of laminated plate-shaped corrugated cardboard members (see FIG. 2).

As shown in FIG. 3, the left side surface facing portion 32a is provided between the left side surface of the compressing device 10 and the water pipe (adjacent member) 11. In other words, the left side surface facing portion 32a is provided in a gap formed between the left side surface of the compressing device 10 and the water pipe 11. The left side surface facing portion 32a extends in a substantially linear shape.

A side surface 32aa of the left side surface facing portion 32a on the water pipe 11 side faces the water pipe 11 and is in contact with the water pipe 11. In addition, a side surface 32ab of the left side surface facing portion 32a on the compressing device 10 side faces the left side surface of the compressing device 10. In the present embodiment, the refrigerant pipe 9 (suction pipe) is provided between the left side surface of the compressing device 10 and the side surface 32ab on the compressing device 10 side. The side surface 32ab of the left side surface facing portion 32a on the compressing device 10 side is planar.

The left front surface facing portion 32b is provided between the front surface of the compressing device 10 and the machine chamber front panel 3cb (see FIG. 1).

A surface 32ba of the left front surface facing portion 32b on the compressing device 10 side faces the front surface of the compressing device 10 and is in contact with the front surface of the compressing device 10. In addition, a part of the surface 32ba on the compressing device 10 side is curved to correspond to the front surface of the compressing device 10.

As shown in FIGS. 3 and 5, the support portion 40 includes a first column portion 41 and a second column portion 42 that are erected on the upper surface of the bottom panel 3b of the housing 3 and a connecting plate portion 43 that connects the first column portion 41 and the second column portion 42. The first column portion 41 and the second column portion 42 are disposed to be spaced apart from each other in the left-right direction by a predetermined distance. The first column portion 41 and the second column portion 42 are disposed to sandwich the compressing device 10.

The first column portion 41 and the second column portion 42 are hollow members that extend in the up-down direction. A cross section of the first column portion 41 and the second column portion 42 in a case of being cut by a horizontal plane has a substantially triangular shape. Specifically, the cross section has a right-angled triangular shape having a surface (inner surfaces 41c and 42c described below) facing the compressing device 10 as a hypotenuse.

The first column portion 41 and the second column portion 42 are formed of corrugated cardboard. The first column portion 41 is formed by bending a single piece of corrugated cardboard.

The first column portion 41 includes a front surface 41a facing the machine chamber front panel 3cb, an outer surface 41b facing the partition wall 3g, and an inner surface 41c facing the compressing device 10.

The first vibration suppression portion 31 is placed on an upper surface of the first column portion 41. Specifically, a front end portion of the first vibration suppression portion 31 is placed on the upper surface of the first column portion 41.

The second column portion 42 includes a front surface 42a facing the machine chamber front panel 3cb, an outer surface 42b facing the water pipe 11, and an inner surface 42c facing the compressing device 10.

The second vibration suppression portion 32 is placed on an upper surface of the second column portion 42. Specifically, a front end portion of the second vibration suppression portion 32 is placed on the upper surface of the second column portion 42.

The connecting plate portion 43 is a plate-shaped member. The connecting plate portion 43 is connected to a center portion of the first column portion 41 and the second column portion 42 in the up-down direction. The connecting plate portion 43 includes a front surface 43a facing the machine chamber front panel 3cb and a rear surface 43b facing the compressing device 10. The connecting plate portion 43 is formed of corrugated cardboard.

Next, a method of transporting the outdoor unit 2 will be described.

The outdoor unit 2 is transported in a state in which the vibration isolating member 20 is attached. Therefore, the vibration isolating member 20 is attached to the outdoor unit 2 in a state in which the machine chamber front panel 3cb is removed (see FIG. 2) before the transport. A method for attaching the vibration isolating member 20 will be described below. After the vibration isolating member 20 is attached, the machine chamber front panel 3cb is attached. The work of attaching the vibration isolating member 20 is performed, for example, in a factory or the like.

Next, the outdoor unit 2 is transported to an installation location by a transport vehicle or the like. Next, the outdoor unit transported to the installation location is installed. The vibration isolating member 20 is removed from the installed outdoor unit 2. The removed vibration isolating member 20 is discarded at the site. The removed vibration isolating member 20 may be transported to a disposal location and discarded at the disposal location.

Next, a method for attaching the vibration isolating member 20 to the outdoor unit 2 will be described.

First, as shown by an arrow in FIG. 2, the support portion 40 is attached from the front of the compressing device 10. In this case, the support portion 40 is moved until the rear surface 43b of the connecting plate portion 43 comes into contact with the front surface of the compressing device 10. The first column portion 41 and the second column portion 42 of the support portion 40 are erected on the bottom panel 3b in a state in which the rear surface 43b of the connecting plate portion 43 is in contact with the front surface of the compressing device 10.

Next, as shown by an arrow in FIG. 2, the vibration suppression portion 30 is attached from the front of the compressing device 10. Specifically, first, the right side surface facing portion 31a of the first vibration suppression portion 31 is inserted from the front into a gap formed between the right side surface of the compressing device 10 and the partition wall 3g (insertion step). In this case, the first vibration suppression portion 31 is moved until the surface 31ba of the right front surface facing portion 31b on the compressing device 10 side comes into contact with the front surface of the compressing device 10. The first vibration suppression portion 31 is placed on the upper surface of the first column portion 41 in a state in which the surface 31ba of the right front surface facing portion 31b on the compressing device 10 side is in contact with the front surface of the compressing device 10 (placement step). In this case, the right side surface facing portion 31a is sandwiched between the right side surface of the compressing device 10 and the partition wall 3g.

Next, the left side surface facing portion 32a of the second vibration suppression portion 32 is inserted from the front into a gap formed between the left side surface of the compressing device 10 and the water pipe 11 (insertion step). In this case, the second vibration suppression portion 32 is moved until the surface 32ba of the left front surface facing portion 32b on the compressing device 10 side comes into contact with the front surface of the compressing device 10. The second vibration suppression portion 32 is placed on the upper surface of the second column portion 42 in a state in which the surface 32ba of the left front surface facing portion 32b on the compressing device 10 side is in contact with the front surface of the compressing device 10 (placement step). In this case, the left side surface facing portion 32a is sandwiched between the refrigerant pipe 9 and the water pipe 11 that are provided adjacent to the left side surface of the compressing device 10.

In this manner, the vibration isolating member 20 is attached to the outdoor unit 2. The support portion 40 and the vibration suppression portion 30 may be adhered to each other or may not be adhered to each other.

When the vibration isolating member 20 is removed from the outdoor unit 2, the vibration isolating member 20 is removed in the reverse order to the above-described steps.

According to the present embodiment, the following operations and effects are obtained.

The pipe (particularly, the refrigerant pipe 9) provided in the outdoor unit 2 according to the present embodiment is formed to have elasticity so as to absorb vibration from the viewpoint of reducing noise and the like. In addition, since a vibration isolating material such as a rubber material is also provided in a leg portion of the compressing device 10, in a case in which a large vibration is applied to the outdoor unit 2 during transport or the like and the compressing device 10 vibrates, the refrigerant pipe 9 may also vibrate and be damaged in response to the vibration of the compressing device 10.

In the present embodiment, since the vibration isolating member 20 is provided in the outdoor unit 2 during transport, the vibration of the compressing device 10 is suppressed. In addition, since the vibration of the refrigerant pipe 9 caused by the vibration of the compressing device 10 is also suppressed, the damage to the refrigerant pipe 9 is suppressed.

In addition, since the vibration of the compressing device 10 is suppressed by providing the vibration isolating member 20, the cost is reduced as compared with a case in which the vibration is suppressed by changing the shape of the compressing device 10 or the like.

In addition, in the present embodiment, the support portion 40 that supports the vibration suppression portion 30 from below is provided. As a result, the position of the vibration suppression portion 30 in the height direction is uniquely determined only by supporting the vibration suppression portion 30 on the support portion 40. Therefore, the vibration suppression portion 30 is easily installed at a predetermined height position. Therefore, the workability of the installation work of the vibration isolating member 20 is improved.

In addition, in the present embodiment, the installation height position of the vibration suppression portion 30 is a position corresponding to the height of the support portion 40. As a result, the vibration suppression portion 30 is installed at a desired height position by appropriately setting the height of the support portion 40. Therefore, the vibration suppression portion 30 is installed at a height position at which the vibration of the compressing device 10 is effectively suppressed. Therefore, the vibration of the compressing device 10 is suitably suppressed.

In addition, in the present embodiment, the vibration suppression portion 30 includes the right side surface facing portion 31a and the left side surface facing portion 32a that extend in the front-rear direction and the right front surface facing portion 31b and the left front surface facing portion 32b that extend in the left-right direction. As a result, in a case in which the right side surface facing portion 31a and the left side surface facing portion 32a are inserted from the front-rear direction into a gap formed between the compressing device 10 and the adjacent components (the partition wall 3g or the water pipe 11), the right front surface facing portion 31b and the left front surface facing portion 32b face the front surface of the compressing device 10. As described above, the vibration suppression portion 30 is installed only by inserting the right side surface facing portion 31a and the left side surface facing portion 32a from the front into the gap formed between the compressing device 10 and the adjacent components (the partition wall 3g or the water pipe 11). Therefore, since the vibration isolating member 20 is easily installed, the workability of the installation work of the vibration isolating member 20 is improved.

In addition, after the outdoor unit 2 is installed, the vibration suppression portion 30 and the support portion 40 may be removed from the outdoor unit 2, or the removed vibration suppression portion 30 and support portion 40 may be disposed of. In the present embodiment, since the vibration suppression portion 30 and the support portion 40 are formed of corrugated cardboard, it is easier to dispose of the removed vibration suppression portion 30 and support portion 40 as compared with a case in which the vibration suppression portion 30 and the support portion 40 are formed of a metal material or the like.

In addition, in the present embodiment, since the vibration suppression portion 30 and the support portion 40 are formed of corrugated cardboard, the cost required for the production is reduced as compared with a case in which the vibration suppression portion 30 and the support portion 40 are formed of a metal material or the like.

The present disclosure is not limited to the above-described embodiments and can be appropriately modified within a scope which does not depart from the gist of the present disclosure.

For example, in the above-described embodiment, the example has been described in which the first vibration suppression portion 31 and the second vibration suppression portion 32 are separate from each other, but the first vibration suppression portion 31 and the second vibration suppression portion 32 may be integrated.

In addition, in the above-described embodiment, the example has been described in which the vibration suppression portion 30 and the support portion 40 are separate from each other, but the vibration suppression portion 30 and the support portion 40 may be integrated.

The vibration isolating member, the outdoor unit, and the method for attaching the vibration isolating member according to the embodiment described above can be understood as follows.

A vibration isolating member according to a first aspect of the present disclosure is a vibration isolating member (20) attached to an outdoor unit (2) including a compressing device (10) that compresses a refrigerant and an adjacent member (3g, 11) that is disposed adjacent to the compressing device, the vibration isolating member including a vibration suppression portion (30) that includes a first surface facing portion (31a, 32a) that extends in a predetermined direction, is provided in a gap formed between the compressing device and the adjacent member, and faces a first surface of the compressing device and a second surface facing portion (31b, 32b) that extends in an intersecting direction intersecting the predetermined direction and faces a second surface of the compressing device, and that suppresses vibration of the compressing device; and a support portion (40) that supports the vibration suppression portion from below.

In the above configuration, the support portion that supports the vibration suppression portion from below is provided. As a result, the position of the vibration suppression portion in the height direction is uniquely determined only by supporting the vibration suppression portion on the support portion. Therefore, the vibration suppression portion is easily installed at a predetermined height position. Therefore, the workability of the installation work of the vibration isolating member is improved.

In addition, in the above configuration, the installation height position of the vibration suppression portion is a position corresponding to the height of the support portion. As a result, the vibration suppression portion is installed at a desired height position by appropriately setting the height of the support portion. Therefore, the vibration suppression portion is installed at a height position at which the vibration of the compressing device can be effectively suppressed. Therefore, the vibration of the compressing device is suitably suppressed.

In addition, in the above configuration, the vibration suppression portion includes the first surface facing portion that extends in the predetermined direction and the second surface facing portion that extends in the intersecting direction. As a result, in a case in which the first facing portion is inserted from the predetermined direction into the gap formed between the compressing device and the adjacent components, the second surface facing portion faces the second surface of the compressing device. As described above, the vibration suppression portion is installed only by inserting the first surface facing portion from the predetermined direction into the gap formed between the compressing device and the adjacent components. Therefore, since the vibration isolating member is easily installed, the workability of the installation work of the vibration isolating member is improved.

In the first aspect, the vibration suppression portion and the support portion may be formed of corrugated cardboard.

After the outdoor unit is installed, the vibration suppression portion and the support portion may be removed from the outdoor unit, or the removed vibration suppression portion and support portion may be disposed of. In the above configuration, since the vibration suppression portion and the support portion are formed of corrugated cardboard, it is easier to dispose of the removed vibration suppression portion and support portion as compared with a case in which the vibration suppression portion and the support portion are formed of a metal material or the like.

In addition, in the above configuration, since the vibration suppression portion and the support portion are formed of corrugated cardboard, the cost required for the production is reduced as compared with a case in which the vibration suppression portion and the support portion are formed of a metal material or the like.

An outdoor unit according to a second aspect of the present disclosure includes a compressing device (10) that compresses a refrigerant, an adjacent member (3g, 11) that is disposed adjacent to the compressing device, and a vibration isolating member (20) that suppresses vibration of the compressing device, in which the vibration isolating member includes a vibration suppression portion (30) that includes a first surface facing portion (31a, 32a) that extends in a predetermined direction, is provided in a gap formed between the compressing device and the adjacent member, and faces a first surface of the compressing device and a second surface facing portion (31b, 32b) that extends in an intersecting direction intersecting the predetermined direction and faces a second surface of the compressing device, and that suppresses vibration of the compressing device, and a support portion (40) that supports the vibration suppression portion from below.

In the second aspect, the vibration suppression portion and the support portion may be formed of corrugated cardboard.

A method for attaching a vibration isolating member according to a third aspect of the present disclosure is a method for attaching a vibration isolating member (20) to an outdoor unit (2) including a compressing device (10) that compresses a refrigerant and an adjacent member (3g, 11) that is disposed adjacent to the compressing device, in which the vibration isolating member includes a vibration suppression portion (30) that includes a first surface facing portion (31a, 32a) that extends in a predetermined direction, is provided in a gap formed between the compressing device and the adjacent member, and faces a first surface of the compressing device and a second surface facing portion (31b, 32b) that extends in an intersecting direction intersecting the predetermined direction and faces a second surface of the compressing device, and that suppresses vibration of the compressing device, and a support portion (40) that supports the vibration suppression portion from below, the method comprising: an insertion step of inserting the first surface facing portion into the gap from the predetermined direction; and a placement step of placing the vibration suppression portion on the support portion.

### Reference Signs List

1: air conditioner
2: outdoor unit
3: housing
3a: upper panel
3b: bottom panel
3ca: heat exchanger chamber front panel
3cb: machine chamber front panel
3d: rear panel
3e: right panel
3f: left panel
3g: partition wall (adjacent member)
5: outdoor heat exchanger
6: blower
7: control box
8: bracket
9: refrigerant pipe
10: compressing device
10a: insulation
11: water pipe (adjacent member)
20: vibration isolating member
30: vibration suppression portion
31: first vibration suppression portion
31a: right side surface facing portion (first surface facing portion)
31aa: side surface
31ab: side surface
31b: right front surface facing portion (second surface facing portion)
31ba: surface
32: second vibration suppression portion
32a: left side surface facing portion (first surface facing portion)
32aa: side surface
32ab: side surface
32b: left front surface facing portion (second surface facing portion)
32ba: surface
40: support portion
41: first column portion
41a: front surface
41b: outer surface
41c: inner surface
42: second column portion
42a: front surface
42b: outer surface
42c: inner surface
43: connecting plate portion
43a: front surface
43b: rear surface
S: space
S1: heat exchanger chamber
S2: machine chamber

## Claims

1. A vibration isolating member attached to an outdoor unit including a compressing device that compresses a refrigerant and an adjacent member that is disposed adjacent to the compressing device, the vibration isolating member comprising:
a vibration suppression portion that includes a first surface facing portion that extends in a predetermined direction, is provided in a gap formed between the compressing device and the adjacent member, and faces a first surface of the compressing device and a second surface facing portion that extends in an intersecting direction intersecting the predetermined direction and faces a second surface of the compressing device, and that suppresses vibration of the compressing device; and
a support portion that supports the vibration suppression portion from below.

2. The vibration isolating member according to claim 1, wherein the vibration suppression portion and the support portion are formed of corrugated cardboard.

3. An outdoor unit comprising:
a compressing device that compresses a refrigerant;
an adjacent member that is disposed adjacent to the compressing device; and
a vibration isolating member that suppresses vibration of the compressing device,
wherein the vibration isolating member includes
a vibration suppression portion that includes a first surface facing portion that extends in a predetermined direction, is provided in a gap formed between the compressing device and the adjacent member, and faces a first surface of the compressing device and a second surface facing portion that extends in an intersecting direction intersecting the predetermined direction and faces a second surface of the compressing device, and that suppresses vibration of the compressing device, and
a support portion that supports the vibration suppression portion from below.

4. The outdoor unit according to claim 3, wherein the vibration suppression portion and the support portion are formed of corrugated cardboard.

5. A method for attaching a vibration isolating member to an outdoor unit including a compressing device that compresses a refrigerant and an adjacent member that is disposed adjacent to the compressing device,
in which the vibration isolating member includes
a vibration suppression portion that includes a first surface facing portion that extends in a predetermined direction, is provided in a gap formed between the compressing device and the adjacent member, and faces a first surface of the compressing device and a second surface facing portion that extends in an intersecting direction intersecting the predetermined direction and faces a second surface of the compressing device, and that suppresses vibration of the compressing device, and
a support portion that supports the vibration suppression portion from below, the method comprising:
an insertion step of inserting the first surface facing portion into the gap from the predetermined direction; and
a placement step of placing the vibration suppression portion on the support portion.
